# EUROPEAN PATENT APPLICATION

(11) **EP 3 832 387 A1**
(43) Date of publication of application: **09.06.2021**
(21) Application number: 18928283.3
(22) Date of filing: 01.08.2018
(51) Int. Cl.: G03B 17/56, H04N 5/225, F16M 11/18

(54) **PHOTOGRAPHING DEVICE AND GIMBAL STABILIZATION APPARATUS**

(71) Applicant: SZ DJI Technology Co., Ltd., Shenzhen, Guangdong 518057 (CN)
(72) Inventor: BIN, Peng, Shenzhen, Guangdong 518057 (CN); WANG, Peng, Shenzhen, Guangdong 518057 (CN)
(74) Representative: Appelt, Christian W.
(86) International application number: PCT/CN2018/098152
(87) International publication number: WO 2020/024198

(57) **Abstract**

A gimbal stabilization device includes a parallelogram connection-bar mechanism. Two ends of a cable (25) are respectively fixed at a first connection bar (21) and a third connection bar (23), which are parallel to each other, and the cable passes through an area between a second connection bar (22) and a fourth connection bar (24), which are parallel to each other. When the second connection bar (22) rotates around its hinge point with the third connection bar (23), a length of the cable (25) exposed at two ends of the second connection bar (22) dynamically changes to adapt to a change of angles between the second connection bar (22), and the first connection bar (21) and the third connection bar (23). The gimbal stabilization device of the present disclosure can not only provide stabilization for the gimbal, but also avoid the problem of pulling or compressing the cable that passes through the gimbal stabilization device, thereby preventing the cable from being damaged and improving the service life and signal transmission quality. The disclosure also provides a photographing device.

## Description

### TECHNICAL FIELD

The present disclosure relates to a photographing device and a gimbal stabilization device, which belongs to the technical field of image and video photographing device.

### BACKGROUND

During shooting of images or videos, a stabilization device is often used to provide a stabilization effect for a camera to achieve a stable and high quality image. However, cables used for communication or power supply pass through the current stabilization device. During the use of the stabilization device, frequent relative movement occurs between the various components and causes the cables passing through the components to be bent and scratched frequently, which can easily cause the cables to break and affect the normal use of the stabilization device.

### SUMMARY

In order to solve the above-described or other potential problems in the existing technology, embodiments of the present disclosure provide a photographing device and a gimbal stabilization device.

According to an aspect of the embodiments of the present disclosure, there is provided a gimbal stabilization device, which includes a first connection bar, a second connection bar, a third connection bar, and a fourth connection bar;
the first connection bar, the second connection bar, the third connection bar, and the fourth connection bar are hinged to form a parallelogram mechanism, where the first connection bar is parallel to the third connection bar, and the second connection bar is parallel to the fourth connection bar;
a first connection member for connecting with a first device is disposed at the first connection bar, and a second connection member for connecting with a second device is disposed at the third connection bar;
fixation members for fixing two ends of a cable are disposed at the first connection bar and the third connection bar, respectively, and the cable is accommodated between the second connection bar and the fourth connection bar;
where, as the second connection bar drives the first connection bar to rotate around a hinge point of the second connection bar and the third connection bar, the length of the cable exposed between the first connection bar and the second connection bar, and the length of the cable exposed between the second connection bar and the third connection bar dynamically change to adapt to changes of the angle between the first connection bar and the second connection bar, and the angle between the third connection bar and the second connection bar.

According to another aspect of the embodiments of the present disclosure, there is provided a photographing device, which includes a gimbal, a gimbal stabilization device, and a camera supported by the gimbal stabilization device or the gimbal;
the gimbal stabilization device includes a first connection bar, a second connection bar, a third connection bar, and a fourth connection bar;
the first connection bar, the second connection bar, the third connection bar, and the fourth connection bar are hinged to form a parallelogram mechanism, where the first connection bar is parallel to the third connection bar, and the second connection bar is parallel to the fourth connection bar;
a first connection member for connecting with a first device is disposed at the first connection bar, and a second connection member for connecting with a second device is disposed at the third connection bar;
fixation members for fixing two ends of a cable are disposed at the first connection bar and the third connection bar respectively, and the cable is accommodated between the second connection bar and the fourth connection bar;
where, as the second connection bar drives the first connection bar to rotate around a hinge point of the second connection bar and the third connection bar, the length of the cable exposed between the first connection bar and the second connection bar, and the length of the cable exposed between the second connection bar and the third connection bar dynamically change to adapt to changes of the angle between the first connection bar and the second connection bar, and the angle between the third connection bar and the second connection bar.

According to the technical solution of the embodiments of the present disclosure, the gimbal stabilization device can provide a stabilization effect of another dimension on the basis of the stabilization effect provided by the single-axis, two-axis or three-axis gimbal, which is beneficial to enrich the application of shooting device. In addition, the gimbal stabilization device is a parallelogram connection-bar mechanism, the cable passes through the second connection bar of the parallelogram connection-bar mechanism, and two ends of the cable are respectively fixed at the first connection bar and the second connection bar hinged at two ends of the second connection bar, therefore, when the second connection bar rotates, the cables exposed at two ends of the second connection bar can dynamically change to adapt to the changes of the angles between the second connection bar and the first connection bar and the third connection bar, and there is no need to reserve a longer cable. As a result, the problem of pulling or compressing the cable is prevented. Therefore, the cable can be prevented from being damaged, and the service life and signal transmission quality can be improved.

The advantages of the additional aspects of the present disclosure are partially given in the following description, and some become obvious from the following description, or can be understood through the practice of the present disclosure.

### BRIEF DESCRIPTION OF THE DRAWINGS

Through the following detailed description with reference to the accompanying drawings, the above and other objects, features and advantages of the embodiments of the present disclosure will become easier to understand. In the accompanying drawings, several embodiments of the present disclosure will be described in an exemplary and non-limiting manner.
FIG. 1 is a schematic structural diagram of a photographing device according to an embodiment of the present disclosure.
FIG. 2 is a schematic structural diagram of a gimbal stabilization device in FIG. 1.
FIG. 3 is an exploded view of FIG. 2.
FIG. 4 is a longitudinal sectional view of the gimbal stabilization device in FIG. 2 when it is at a first position.
FIG. 5 is a simplified schematic diagram of FIG. 4.
FIG. 6 is a longitudinal sectional view of the gimbal stabilization device in FIG. 2 when it is at a second position.
FIG. 7 is a simplified schematic diagram of FIG. 6.
FIG. 8 is a longitudinal sectional view of the gimbal stabilization device in FIG. 2 when it is at a third position.
FIG. 9 is a simplified schematic diagram of FIG. 8.

### Reference numerals:

1-Body, 11-Handheld Member, 2-Gimbal Stabilization Device, 21-First Connection Bar, 211-Rear Side Plate, 211a-First Upper Hinge Hole, 211b-First Lower Hinge Hole, 212-Front Plate, 212a-Fixation Member, 213-First Connection Member, 22-Second Connection Bar, 221-Upper Side Plate, 221a-First Hinge Hole, 221b-Second Hinge Hole, 222-Cover Plate, 223-Cavity, 23-Third Connection Bar, 231-Front Side Plate, 231a-Second Upper Hinge Hole, 231b-Second Lower Hinge Hole, 232-Rear Plate, 232a-Fixation Member, 233-Second Connection Member, 24-Fourth Connection Bar, 241-Lower Side Plate, 241a-Third Hinge Hole, 241b-Fourth Hinge Hole, 25-Cable, 26-Hinge Shaft, 3-Gimbal, 4-Camera.

### DETAILED DESCRIPTION OF THE EMBODIMENTS

Some embodiments of the present disclosure will be described in detail with reference to the accompanying drawings. In the case of no conflict, the following embodiments and features in the embodiments can be combined with each other.

In the description of the present disclosure, it should be understood that, unless stated otherwise, the orientation or position relationship indicated by the terms "upper," "lower," "front," "rear," "left," "right," "top," "bottom," "inside," and "outside," etc. is an orientation or position relationship shown in the drawings, only for the convenience of describing the present disclosure and simplifying the description, rather than indicating or implying that the device or element has to have a specific orientation, and be constructed and operated in a specific orientation, which therefore cannot be understood as a limitation to the present disclosure.

In addition, the terms "first" and "second" are only used for a purpose of description, and cannot be understood as indicating or implying a relative importance or implicitly indicating a number of indicated technical features. Therefore, the features associated with "first" and "second" may explicitly or implicitly include at least one of the features. In the description of the present disclosure, "a plurality of' means at least two, such as two, three, etc., unless otherwise specifically defined.

In the present disclosure, unless otherwise clearly defined and specified, the terms "mounted," "connected," "connecting," "fixed," and other terms should be understood in a broad manner, for example, it may be a fixed connection, a detachable connection, or integrated. It can be directly connected or indirectly connected through an intermediate medium, and it can be an internal communication between two elements or an interaction relationship between two elements, unless specifically defined otherwise. For those of ordinary skill in the art, the specific meaning of the above-described terms in the present disclosure can be understood according to specific circumstances.

In the description of this disclosure, descriptions with reference to the terms "an embodiment," "some embodiments, "examples," "specific examples," or "some examples," etc. mean specific features, structures, materials or characteristics described with reference to embodiments or examples are included in at least one embodiment or example of the present disclosure. In this disclosure, the schematic representations of the above terms do not necessarily refer to the same embodiment or example. Moreover, the described specific features, structures, materials or characteristics can be combined in any one or more embodiments or examples in a suitable manner. In addition, in the case of no conflict, those skilled in the art can combine the different embodiments or examples, and the characteristics of the different embodiments or examples described in this disclosure.

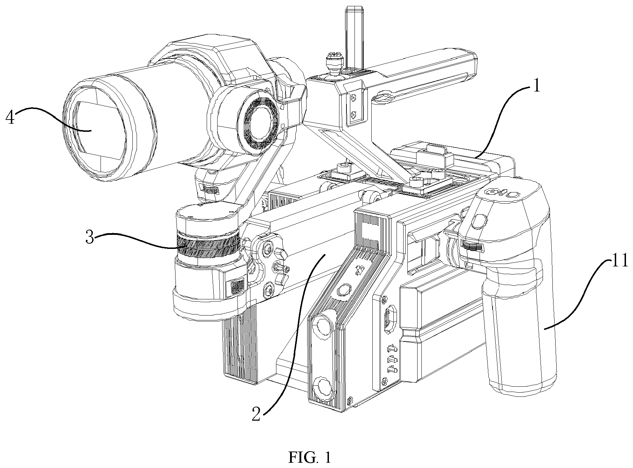

FIG. 1 is a schematic structural diagram of a photographing device according to an embodiment of the present disclosure. As shown in FIG. 1, the photographing device of this embodiment includes a body 1, a gimbal 3, a gimbal stabilization device 2 that is described in detail below, and a camera 4 supported by the gimbal stabilization device 2 or the gimbal 3. A first connection member of the gimbal stabilization device 2 is used to mount the gimbal 3, and a second connection member of the gimbal stabilization device 2 is used to fix to the body 1. Optionally, the body 1 of the photographing device includes a handheld member 11 for the operator to hold. It can be understood that the gimbal stabilization device 4 can also be disposed at one end of the gimbal 3 away from the body 1. At this time, the camera 4 is directly supported by the gimbal stabilization device 4.

As shown in FIG. 1, in some examples, the gimbal 3 is detachably mounted at the first connection member of the gimbal stabilization device 2 and the second connection member of the gimbal stabilization device 2 is detachably mounted at the body 1. For example, the first connection member of the gimbal stabilization device 2 may form an at least partially circular motor mount, so that a motor of a single-axis gimbal, a two-axis gimbal, or a three-axis gimbal (including but not limited to a yaw motor, a pitch motor or a roll motor, etc.) is installed at the circular motor mount, therefore the gimbal 3 is connected to the body 1. The body 1 can be formed into any suitable structure for mounting the second connection member of the gimbal stabilization device 2. For example, as shown in FIG. 1, a mounting groove is formed at the body 1, and the second connection member is accommodated and fixed at the mounting groove, so that the overall height of the photographing device can be reduced, and its compactness and portability can be realized.

In other optional examples, the first connection member of the gimbal stabilization device 2 may be connected to the gimbal 3 through one or more connection-bar mechanisms, and the second connection member is directly fixed to the body 1. In this example, the first connection member connected to the first connection member of the gimbal stabilization device 2 and the gimbal 3 may be a structure of a single connection bar or a multiple connection bars, such as a parallelogram connection-bar mechanism. It is easy to understand that in some other optional examples, the second connection member of the gimbal stabilization device 2 may be fixed to the body 1 through one or more connection-bar mechanisms, and the first connection member is directly used to mount the gimbal 3, or, the first connection member of the gimbal stabilization device 2 is connected to the gimbal 3 through one or more connection-bar mechanisms, and the second connection member is also fixed to the body 1 one or more connection-bar mechanisms.

It should be noted that although the first connection member is connected to the gimbal 3 and the second connection member is connected to the body 1 in the above embodiments, in practical applications, the first connection member may be connected to the body 1, and the second connection member is connected to the gimbal 3.

In order to make the description more concise and convenient, the following embodiments will exemplify the structure and function of the gimbal stabilization device 2 with examples of the first connection member connected to the gimbal 3 and the second connection member connected to the body 1. It should be understood that the following embodiments are not specific limitations on the structure and function of the gimbal stabilization device 2. Simple replacements or improvements that do not require creative effort on the ideas described in the following embodiments also belong to the disclosed content of the embodiments.

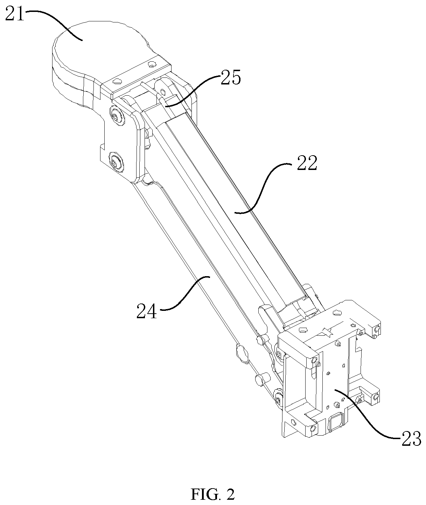

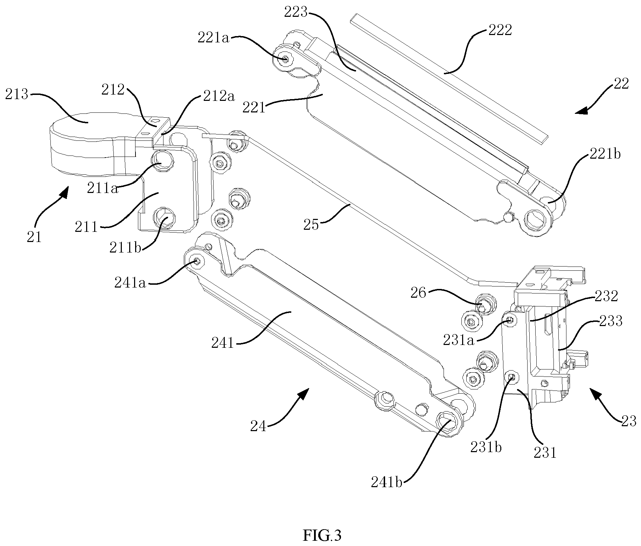

FIG. 2 is a schematic structural diagram of a gimbal stabilization device in FIG. 1, and FIG. 3 is an exploded view of FIG. 2. As shown in FIGs. 2 and 3, the gimbal stabilization device 2 of this embodiment includes a first connection bar 21, a second connection bar 22, a third connection bar 23, and a fourth connection bar 24. These four connection bars are hinged to form a parallelogram mechanism. The first connection bar 21 on a left side is parallel to the third connection bar 23 on a right side, and the second connection bar 22 located above is parallel to the fourth connection bar 24 located below. A first connection member 213 of the gimbal stabilization device 2 is formed at the first connection bar 21 for directly connecting with the gimbal 3 or indirectly connecting with the gimbal 3 through a connection-bar mechanism. A second connection member 233 is formed at the third connection bar 23 for directly connecting with the body 1 of the photographing device, or indirectly connecting with the body 1 of the photographing device through a connection-bar mechanism.

Referring to FIGS. 2 and 3, a cable 25 is inserted between the second connection bar 22 and the fourth connection bar 24, and the cable 25 is used for a communication connection between the gimbal 3 and the body 1 of the photographing device. Fixation members are formed at the first connection bar 21 and the third connection bar 23 respectively for fixing two ends of the cable 25. As shown in FIG. 2, it is easy to understand that based on the above configuration, a length of the cable 25 between the first connection bar 21 and the third connection bar 23 is determined, and it is divided into three parts by the second connection bar 22. A left part is a part exposed between the first connection bar 21 and the second connection bar 22, a middle part is a part hidden in the second connection bar 22, and a right part is a part exposed between the second connection bar 22 and the third connection bar 23.

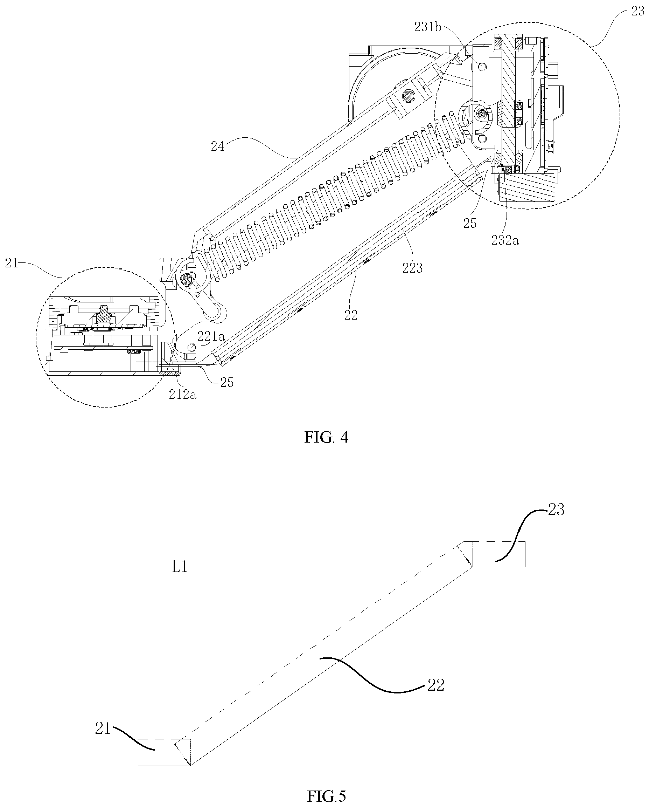

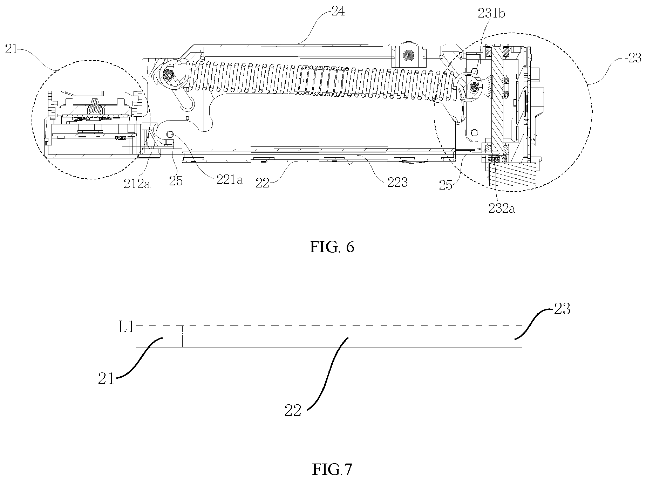

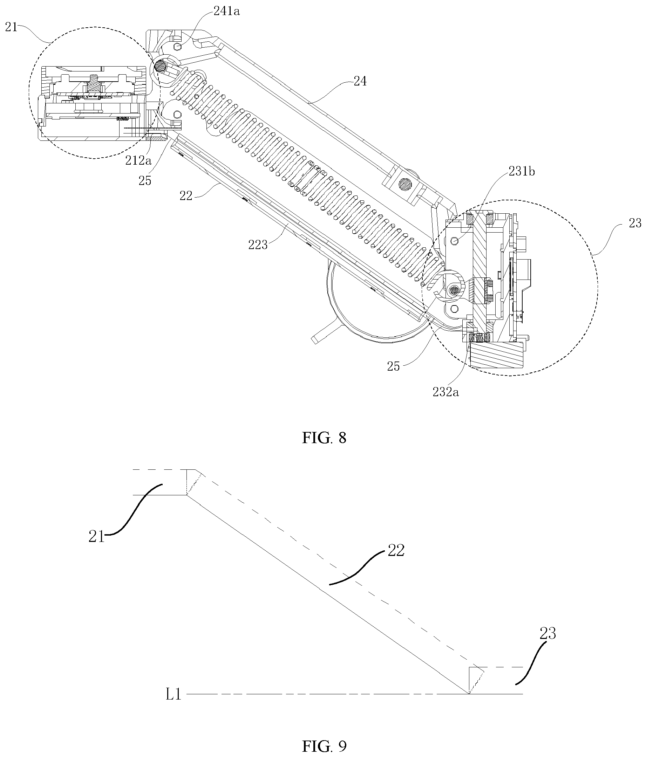

FIG. 4 is a longitudinal sectional view of the gimbal stabilization device in FIG. 2 when it is at a first position. FIG. 5 is a simplified schematic diagram of FIG. 4. FIG. 6 is a longitudinal sectional view of the gimbal stabilization device in FIG. 2 when it is at a second position. FIG. 7 is a simplified schematic diagram of FIG. 6. FIG. 8 is a longitudinal sectional view of the gimbal stabilization device in FIG. 2 when it is at a third position. FIG. 9 is a simplified schematic diagram of FIG. 8. In FIGs. 5, 7 and 9, L1 represents a horizontal plane, that is, the third connection bar 23 in FIGs. 4 to 9 is fixed horizontally.

As shown in FIGs. 4 to 9, when the second connection bar 22 drives the first connection bar 21 to rotate from a position shown in FIG. 4, through a position shown in FIG. 6, and finally to a position shown in FIG. 8, around a hinge point of the second connection bar 22 and the third connection bar 23, a length of the left part of the cable 25 exposed between the first connection bar 21 and the second connection bar 22 gradually decreases, and a length of the right part of the cable 25 exposed between the second connection bar 22 and the third connection bar 23 gradually increases. Through a dynamic change of the length of the left and right parts of the cable 25, changes of an angle between the first connection bar 21 and the second connection bar 22, and an angle between the third connection bar 23 and the second connection bar 22 are adapted. In other words, when the second connection bar 22 rotates relative to the third connection bar 23, the cable 25 between the second connection bar 22 and the fourth connection bar 24 is displaced relative to the second connection bar 22. Therefore, without changing the length of the cable 25 between the first connection bar 21 and the third connection bar 23, adjusting the length of the left and right parts of the second connection bar 22 can adapt the changes of angles between the second connection bar 22, and the first connection bar 21 and the third connection bar 23.

The gimbal stabilization device 2 of the embodiments can provide a stabilization effect of another dimension on the basis of the stabilization effect provided by the single-axis, two-axis or three-axis gimbal 3, which is beneficial to enrich the application of shooting device. For example, the photographing device shown in FIG. 1 uses a three-axis gimbal 3. By mounting the gimbal stabilization device 2 of this embodiment in a horizontal direction, a height of the gimbal 3 in a vertical direction can be adjusted, and then a height of the camera 4 mounted at the gimbal 3 can be adjusted, which allows a user to point the camera 4 horizontally at the object being photographed in a larger range in the vertical direction, instead of shooting the object from a high angle or a low angle only with a photographing device with a three-axis gimbal 3 only. In addition, adjusting the vertical height through the parallelogram connection-bar mechanism can also improve the stabilization and avoid affecting the image quality. It is easy to understand that, in FIG. 1, the gimbal stabilization device 2 can be mounted at the gimbal 3 in any desired direction, or through one or more connection-bar mechanisms as described above. For example, in another embodiment, the gimbal stabilization device 2 is mounted at the photographing body 1 or connected with the gimbal 3 to achieve the needed angle adjustment of the gimbal 3.

In addition, the gimbal stabilization device 2 of this embodiment is a parallelogram connection-bar mechanism, and the cable 25 passes through the second connection bar 22 of the parallelogram connection-bar mechanism. Two ends of the cable 25 are respectively fixed at the first connection bar 21 and the second connection bar 22 hinged at two ends of the second connection bar 22, and the length of the cable 25 only needs to be equal to the length between the first connection bar 21 and the second connection bar 22, therefore there is no need to reserve a longer cable 25. Moreover, no matter where the second connection bar 22 rotates to around its hinge point with the third connection bar 23, the cable 25 of this length can compensate for the changes of angles between the second connection bar 22, and the first connection bar 21 and the third connection bar 23 through the dynamic change of the length exposed at the two ends of the connection bar 22, so that the cable 25 will not be pulled or compressed. Therefore, the cable 25 can be prevented from being damaged, and the service life and signal transmission quality can be improved.

In order to better introduce the solution of the embodiments, the structure of each connection bar is separately introduced in the following with reference to FIG. 3, where the left side in FIG. 3 is defined as the front and the right side is defined as the rear.

In the embodiments, the second connection bar 22 includes an upper casing, and a cavity for accommodating the cable 25 is formed at the upper casing.

Specifically, the upper casing includes two upper side plates 221 disposed opposite to each other and a cover plate 222 covering the two upper side plates 221, so that the cover plate 222 and the two upper side plates 221 are enclosed to form a cavity 223 that accommodates the above-described cable 25.

First hinge holes 221a are formed at the front ends of the two upper side plates 221 for a hinge connection with the first connection bar 21, and second hinge holes 221b are formed at the rear ends of the two upper side plates 221 for a hinge connection with the third connection bar 23. In this embodiment, in order to form the first hinge hole 221a and the second hinge hole 221b, upper lug plates may be formed at a front end and a rear end of the two upper side plates 221, so as to dispose hinge holes on the upper lug plates. It can be understood that this embodiment does not limit that the first hinge hole 221a and the second hinge hole 221b must be formed at both upper side plates 221. For example, in some embodiments, the first hinge hole 221a and the second hinge hole 221b may be formed at the front end and the rear end of one of the side plates, respectively. In some other examples, the first hinge hole 221a may be formed at the front end of one of the upper plates 221 (for example, the upper plate 221 located at the inner side), and the second hinge hole 221b is formed at the rear end of the other upper plate 221 (for example, the upper plate located at the outer side).

Optionally, in some optional embodiments, the cover plate 222 and the two upper side plates 221 may be integrally formed as an integrated piece, or the two upper side plates 221 may be connected as a whole piece through a connection plate and then the cover plate 222 is closed on the top of the two upper side plates 221 to simplify the subsequent assembly process.

It should be understood that although some optional structures of the second connection bar 22 have been described above, they are not a specific limitation on the structure of the second connection bar 22 in this embodiment. For example, in some optional embodiments, a hollow or solid rod may be used to replace the above-described upper casing as the second connection bar 22. For another example, only one plate can be used to replace the above-described upper casing as the second connection bar 22.

Referring to FIG. 3, in this embodiment, the fourth connection bar 24 parallel to the second connection bar 22 includes a lower casing, and the above-described upper casing covers the lower casing.

Specifically, the lower casing includes a bottom plate and two lower side plates 241 located at two sides of the bottom plate. In this embodiment, the two lower side plates 241 and the two upper side plates 221 may abut each other, or one side surface of the upper side plate 221 and one side surface of the lower side plate 241 may fit with each other. For example, the outer surfaces of the two lower side plates 241 and the inner surfaces of the two upper plates 221 fit with each other respectively, or as shown in FIG. 2, the inner surfaces of the two lower side plates 241 and the outer surfaces of the two upper plates 221 fit with each other respectively, or the outer surface of one lower side plate 241 and the inner surface of one upper side plate 221 fit with each other, and the inner surface of the other lower side plate 241 and the outer surface of the other upper side plate 221 fit with each other.

Third hinge holes 241a are formed at the front ends of the two lower side plates 241 for a hinge connection with the first connection bar 21, and fourth hinge holes 241b are formed at the rear ends of the two lower side plates 241 for a hinge connection with the third connection bar 23. In this embodiment, in order to form the third hinge hole 241a and the fourth hinge hole 241b, lower lug plates may be formed at a front end and a rear end of the two lower side plates 241, so as to dispose hinge holes on the lower lug plates. Optionally, the shape of the lower lug plate may match the shape of the upper lug plate as shown in FIG. 3. Similar to the upper casing, this embodiment does not limit that the third hinge hole 241a and the fourth hinge hole 241b must be formed at both lower side plates 241. For example, in some embodiments, the third hinge hole 241a and the fourth hinge hole 241b may be formed at the front end and the rear end of one of the side plates, respectively. In some other examples, the third hinge hole 241a may be formed at the front end of one of the lower side plates 241 (for example, the lower side plate 241 located at the inner side), and the fourth hinge hole 221b is formed at the rear end of the other lower side plate 241 (for example, the lower plate located at the outer side).

Optionally, similar to the upper casing, the bottom plate of the lower casing and the two lower side plates 241 may be integrally formed as an integrated piece, or the two lower side plates 241 may be connected as a whole piece through a connection plate and then a cover plate is closed on the bottom of the two lower side plates 241 to simplify the subsequent assembly process.

Similarly, in this embodiment, the fourth connection bar 24 is not restricted to have the above structures and other structures can be used. For example, in some optional embodiments, a hollow or solid bar may be used to replace the above-described lower casing as the fourth connection bar 24, or only one plate can be used to replace the above-described lower casing as the fourth connection bar 24.

Referring to FIG. 3, the first connection bar 21 of this embodiment includes a front casing, and a first connection member 213 described above is formed at a front end of the front casing.

Specifically, the front casing includes a front plate 212 and two rear side plates 211 located behind the front plate 212. The two rear side plates 211 may be located at an outer side of the upper side plate 221 and the lower side plate 241, that is, the inner surfaces of the two rear side plates 211 and the outer surfaces of the two upper side plates 221 and the outer surface of the two lower side plates 241 fit with each other, and FIG. 2 can be referred to for details. The two rear side plates 211 may also be located at the inner side of the upper side plate 221 and the lower side plate 241, that is, the outer surfaces of the two rear side plates 211 and the inner surfaces of the two upper side plates 221 and the inner surfaces of the two lower side plate 241 fit with each other.

In this embodiment, in order to realize hinge connections of the first connection bar 21 with the second connection bar 22 and with the fourth connection bar 24, a first upper hinge shaft for passing through the first hinge holes 221a located at the two upper side plates 221 may be directly formed at the upper part of the two rear side plates 211, and a first lower hinge shaft for passing through the third hinge holes 241a located at the two lower side plates 241 is formed at the lower part of the two rear side plates 211 and is located below the first upper hinge shaft. As shown in FIG. 3, a first upper hinge hole 211a and a first lower hinge hole 211b located below the first upper hinge hole 211a may be formed at the two rear side plates 211, respectively. During assembling, a hinge shaft 26 passes through the first upper hinge hole 211a and the first hinge hole 221a to realize the hinge connection of the first connection bar 21 with the second connection bar 22, and another hinge shaft 26 passes through the first lower hinge hole 211b and the third hinge hole 241a to realize the hinge connection of the first connection bar 21 with the fourth connection bar 24.

Referring to FIG. 3, a fixation member 212a for fixing the front end of the cable 25 is disposed at the front plate 212, and a first connection member 213 is disposed in front of the front plate 212. The first connection member 213 may be located at the top plate of the front plate 212. Specifically, the fixation member 212a disposed at the front plate 212 may be a cable hole through which the cable 25 passes for fixing. The first connection member 213 may be disposed at a position near an upper side of the front plate 212, or may be disposed at a position near a lower side of the front plate 212. The specific structure of the first connection member 213 is not limited, and it may be the circular motor mount as described above.

It can be understood that in some other optional embodiments, the first connection bar 21 may not be provided in a shape of the front casing described above. For example, it can be disposed in a shape similar to the Arabic numeral 7 or in a shape similar to the English letter T and rotated clockwise by ninety degrees so as to be hinged with the second connection bar 22 and the fourth connection bar 24. In addition, the first connection bar 21 may be a bar structure or a plate structure, etc., which is not specifically limited here.

As shown in FIG. 3, the third connection bar 23 of this embodiment includes a rear casing, and a second connection member 233 described above is formed at a rear end of the rear casing.

Specifically, the rear casing includes a rear plate 232 and two front side plates 231 located in front of the rear plate 232. The two front side plates 231 may be located at an inner side of the upper side plate 221 and the lower side plate 241, that is, the outer surfaces of the two front side plates 231 and the inner surfaces of the two upper side plates 221 and the inner surfaces of the two lower side plates 241 fit with each other, and FIG. 2 can be referred to for details. The two front side plates 231 can also be located at an outer side of the upper side plate 221 and the lower side plate 241, that is, the inner surfaces of the two front side plates 231 and the outer surfaces of the two upper side plates 221 and the outer surfaces of the two lower side plate 241 fit with each other.

In this embodiment, in order to realize hinge connections of the first connection bar 21 with the second connection bar 22 and with the fourth connection bar 24, a second upper hinge shaft 26 for passing through the second hinge holes 221b located at the two upper side plates 221 may be directly formed at the upper part of the two front side plates 231, and a second lower hinge shaft 26 for passing through the fourth hinge holes 241b located at the two lower side plates 241 is formed at the lower part of the two front side plates 231 and is located below the second upper hinge shaft 26. As shown in FIG. 3, a second upper hinge hole 231a and a second lower hinge hole 231b located below the second upper hinge hole 231a may be formed at the two rear side plates 211, respectively. During assembling, a hinge shaft 26 passes through the second upper hinge hole 231a and the second hinge hole 221b to realize the hinge connection of the third connection bar 23 with the second connection bar 22, and another hinge shaft 26 passes through the second lower hinge hole 231b and the fourth hinge hole 241b to realize the hinge connection of the third connection bar 23 with the fourth connection bar 24.

A fixation member 232a for fixing the rear end of the cable 25 is disposed at the rear plate 232, and a second connection member 233 is disposed behind the rear plate 232. The second connection member 233 may be located at any position suitable for connecting with the body 1 of the photographing device or the connection-bar mechanism. Specifically, the fixation member 232a disposed at the rear plate 232 may be a cable hole through which the rear part of the cable 25 passes for fixing. The second connection member 233 may be a frame structure that can increase the connection strength, so as to improve the stabilization of the gimbal stabilization device 2 during movement.

It can be understood that in some other optional embodiments, the third connection bar 23 may not be provided in a shape of the rear casing described above. For example, it can be disposed in a shape similar to the English letter L or in a shape similar to the English letter T and rotated clockwise by ninety degrees so as to be hinged with the second connection bar 22 and the fourth connection bar 24. In addition, the third connection bar 23 may be a bar structure or a plate structure, etc., which is not specifically limited here.

Although the advantages associated with some embodiments of the technology have been described in the context of these embodiments, other embodiments may also include such advantages, and not all embodiments describe all advantages of the present disclosure in detail. The advantages objectively brought by the technical features in the embodiments should be regarded as the advantages of the present disclosure which are different from the existing technologies, and belong to the scope of the present disclosure.

## Claims

1. A gimbal stabilization device comprising a first connection bar, a second connection bar, a third connection bar, and a fourth connection bar;
the first connection bar, the second connection bar, the third connection bar, and the fourth connection bar are hinged to form a parallelogram mechanism, the first connection bar is parallel to the third connection bar, the second connection bar is parallel to the fourth connection bar;
a first connection member for connecting with a first device is disposed at the first connection bar, a second connection member for connecting with a second device is disposed at the third connection bar;
fixation members for fixing two ends of a cable are disposed at the first connection bar and the third connection bar respectively, the cable is accommodated between the second connection bar and the fourth connection bar;
wherein as the second connection bar drives the first connection bar to rotate around a hinge point of the second connection bar and the third connection bar, a length of the cable exposed between the first connection bar and the second connection bar, and a length of the cable exposed between the second connection bar and the third connection bar dynamically change to adapt to changes of an angle between the first connection bar and the second connection bar, and an angle between the third connection bar and the second connection bar.

2. The gimbal stabilization device of claim 1, wherein the second connection bar includes an upper casing, a cavity for accommodating the cable is formed at the upper casing.

3. The gimbal stabilization device of claim 2, wherein the upper casing includes two upper side plates disposed opposite to each other and a cover plate, the cover plate covers the two upper side plates and encloses with the two upper side plates to form the cavity that accommodates the cable.

4. The gimbal stabilization device of claim 3, wherein first hinge holes are formed at front ends of the two upper side plates for a hinge connection with the first connection bar, second hinge holes are formed at rear ends of the two upper side plates for a hinge connection with the third connection bar.

5. The gimbal stabilization device of claim 3 or 4, wherein the fourth connection bar includes a lower casing, the upper casing covers the lower casing.

6. The gimbal stabilization device of claim 5, wherein the lower casing includes a bottom plate and two lower side plates located at two sides of the bottom plate.

7. The gimbal stabilization device of claim 6, wherein one side surface of the upper side plate and one side surface of the lower side plate fit with each other.

8. The gimbal stabilization device of claim 7, wherein an outer surface of the upper side plate and an inner surface of the lower side plate fit with each other, or an inner surface of the upper side plate and an outer surface of the lower side plate fit with each other.

9. The gimbal stabilization device of any of claims 6-8, wherein third hinge holes are formed at front ends of the two lower side plates for a hinge connection with the first connection bar, fourth hinge holes are formed at rear ends of the two lower side plates for a hinge connection with the third connection bar.

10. The gimbal stabilization device of claim 9, wherein the first connection bar includes a front casing, the first connection member is formed at a front end of the front casing.

11. The gimbal stabilization device of claim 10, wherein:
the front casing includes a front plate and two rear side plates located behind the front plate;
the first connection member is disposed in front of the front plate;
side surfaces of the two rear side plates and side surfaces of the upper side plate and the lower side plate fit with each other;
a fixation member for fixing one end of the cable is disposed at the front plate.

12. The gimbal stabilization device of claim 11, wherein the outer surface of the rear side plate and the inner surfaces of the upper side plate and lower side plate fit with each other, or the inner surface of the rear side plate and the outer surfaces of the upper side plate and lower side plate fit with each other.

13. The gimbal stabilization device of claim 9, wherein the third connection bar includes a rear casing, the second connection member is formed at a rear end of the rear casing.

14. The gimbal stabilization device of claim 13, wherein:
the rear casing includes a rear plate and two front side plates located in front of the rear plate;
the second connection member is disposed behind the rear plate;
side surfaces of the two front side plates and the side surfaces of the upper side plate and the lower side plate fit with each other;
a fixation member for fixing the other end of the cable is disposed at the rear plate.

15. The gimbal stabilization device of claim 14, wherein the outer surface of the front side plate and the inner surfaces of the upper side plate and lower side plate fit with each other, or the inner surface of the front side plate and the outer surfaces of the upper side plate and lower side plate fit with each other.

16. The gimbal stabilization device of any of claims 1-4, wherein:
the first device is one of a gimbal, a body of the photographing device, a connection-bar mechanism, the second device is another one of the gimbal, the body of the photographing device, the connection-bar mechanism; or
the first device and the second device are both connection-bar mechanisms.

17. A photographing device comprising a gimbal, a gimbal stabilization device, and a camera supported by the gimbal stabilization device or the gimbal;
the gimbal stabilization device includes a first connection bar, a second connection bar, a third connection bar, and a fourth connection bar;
the first connection bar, the second connection bar, the third connection bar, and the fourth connection bar are hinged to form a parallelogram mechanism, the first connection bar is parallel to the third connection bar, the second connection bar is parallel to the fourth connection bar;
a first connection member for connecting with a first device is disposed at the first connection bar, and a second connection member for connecting with a second device is disposed at the third connection bar;
fixation members for fixing two ends of a cable are disposed at the first connection bar and the third connection bar respectively, the cable is accommodated between the second connection bar and the fourth connection bar;
wherein as the second connection bar drives the first connection bar to rotate around a hinge point of the second connection bar and the third connection bar, a length of the cable exposed between the first connection bar and the second connection bar, and a length of the cable exposed between the second connection bar and the third connection bar dynamically change to adapt to changes of an angle between the first connection bar and the second connection bar, and an angle between the third connection bar and the second connection bar.

18. The photographing device of claim 17, wherein the second connection bar includes an upper casing, a cavity for accommodating the cable is formed at the upper casing.

19. The photographing device of claim 18, wherein the upper casing includes two upper side plates disposed opposite to each other and a cover plate, the cover plate covers the two upper side plates and encloses with the two upper side plates to form the cavity that accommodates the cable.

20. The photographing device of claim 19, wherein first hinge holes are formed at front ends of the two upper side plates for a hinge connection with the first connection bar, second hinge holes are formed at rear ends of the two upper side plates for a hinge connection with the third connection bar.

21. The photographing device of claim 19 or 20, wherein the fourth connection bar includes a lower casing, the upper casing covers the lower casing.

22. The photographing device of claim 21, wherein the lower casing includes a bottom plate and two lower side plates located at two sides of the bottom plate.

23. The photographing device of claim 22, wherein one side surface of the upper side plate and one side surface of the lower side plate fit with each other.

24. The photographing device of claim 23, wherein an outer surface of the upper side plate and an inner surface of the lower side plate fit with each other, or an inner surface of the upper side plate and an outer surface of the lower side plate fit with each other.

25. The photographing device of any of claims 22-24, wherein third hinge holes are formed at front ends of the two lower side plates for a hinge connection with the first connection bar, fourth hinge holes are formed at rear ends of the two lower side plates for a hinge connection with the third connection bar.

26. The photographing device of claim 25, wherein the first connection bar includes a front casing, the first connection member is formed at a front end of the front casing.

27. The photographing device of claim 26, wherein:
the front casing includes a front plate and two rear side plates located behind the front plate;
the first connection member is disposed in front of the front plate;
side surfaces of the two rear side plates and the side surfaces of the upper side plate and the lower side plate fit with each other;
a fixation member for fixing one end of the cable is disposed at the front plate.

28. The photographing device of claim 27, wherein the outer surface of the rear side plate and the inner surfaces of the upper side plate and lower side plate fit with each other, or the inner surface of the rear side plate and the outer surfaces of the upper side plate and lower side plate fit with each other.

29. The photographing device of claim 25, wherein the third connection bar includes a rear casing, the second connection member is formed at a rear end of the rear casing.

30. The photographing device of claim 29, wherein:
the rear casing includes a rear plate and two front side plates located in front of the rear plate;
the second connection member is disposed behind the rear plate;
side surfaces of the two front side plates and the side surfaces of the upper side plate and the lower side plate fit with each other;
a fixation member for fixing the other end of the cable is disposed at the rear plate.

31. The photographing device of claim 30, wherein the outer surface of the front side plate and the inner surfaces of the upper side plate and lower side plate fit with each other, or the inner surface of the front side plate and the outer surfaces of the upper side plate and lower side plate fit with each other.

32. The photographing device of any of claims 17-20, wherein the first device is a gimbal, the first connection member is connected to the gimbal through one or more connection-bar mechanisms.

33. The photographing device of claim 32, wherein the gimbal is one of a single-axis gimbal, a two-axis gimbal, a three-axis gimbal.

34. The photographing device of any of claims 17-20, wherein the photographing device further includes a body, the second device is the body.

35. The photographing device of claim 34, wherein the second connection member is fixed to the body through one or more connection-bar mechanisms.

36. The photographing device of claim 34, wherein the body includes a handheld member.
